# EUROPÄISCHE PATENTSCHRIFT

(11) **EP 1 834 103 B1**
(45) Veröffentlichungstag und Bekanntmachung des Hinweises auf die Patenterteilung: **23.10.2019**
(21) Anmeldenummer: 05800698.2
(22) Anmeldetag: 11.11.2005
(51) Int. Cl.: F16C 19/10, F16C 33/60

(54) **GROSSWÄLZLAGER MIT LAUFBAHNEN BESTEHEND AUS RINGSEGMENTEN**
LARGE ROLLING BEARING WITH RACEWAYS COMPRISED OF RING SEGMENTS
PALIER DE ROULEMENT DE GRANDE DIMENSION AVEC CHEMINS DE ROULEMENT COMPOSÉS DE BAGUES SEGMENTÉES

(30) Priorität: 29.11.2004 DE 102004057676
(43) Veröffentlichungstag der Anmeldung: 19.09.2007
(73) Patentinhaber: Bühler AG, 9240 Uzwil (CH)
(72) Erfinder: SILBERMANN, Kai, 38116 Braunschweig (DE); BISCHOFF, Wolf-Eckart, 38122 Braunschweig (DE)
(74) Vertreter: Vossius & Partner Patentanwälte Rechtsanwälte mbB
(86) Internationale Anmeldenummer: PCT/CH2005/000668
(87) Internationale Veröffentlichungsnummer: WO 2006/056084

(56) Entgegenhaltungen:
- DE-C- 52 638
- DE-C- 272 055
- DE-C- 855 981
- DE-C1- 3 407 685
- GB-A- 960 100
- US-A- 579 857
- US-A- 2 545 122
- US-A- 3 985 406
- US-A- 4 126 361

## Beschreibung

Die Erfindung betrifft eine runde Darre, Horde oder Flachbodenweiche mit einem Lager mit Wälzelementen, insbesondere ein Ringlager bzw. eine Innenführung zur Ausführung von ebenen Drehbewegungen.

Die Druckschrift DE 52 638 C beschreibt eine Malzdarre mit drehenden Scheiben oder Bühnen, die Druckschrift DE 855 981 C betrifft eine Vorrichtung zur Herstellung von Malz auf drehbaren runden Horden und die Druckschrift DE 34 07 685 C1 zeigt eine Rundhordendarre mit einer Drehhorde. Zur Abstützung ist jeweils eine durch einzelne Stützrollen gebildete Drehführung vorgesehen.

Kugel- oder Rollenlager mit grossen Durchmessern zur Ausführung von ebenen Drehbewegungen sind bekannt, zum Beispiel bei Drehkranen, Panzern oder Werkzeugmaschinen. Trotz ihrer Grösse werden sie mit hoher Genauigkeit gefertigt, was entsprechend hohe Kosten verursacht. Die einteiligen Laufbahnen der Lagerelemente sind zudem nur mit hohem Aufwand handhabbar.

Der Erfindung liegt daher die Aufgabe zugrunde, ein Lager einer runden Darre, Horde bzw. Flachbodenweiche zu entwickeln, das die Nachteile des Standes der Technik überwindet und insbesondere auch bei grossen Durchmessern einfach und mit vergleichsweise geringem Aufwand herstellbar und handhabbar ist.

Die Lösung der Aufgabe erfolgt mit den Merkmalen des Patentanspruchs, vorteilhafte Ausgestaltungen sind in den Unteransprüchen offenbart.

Das Lager ist als Drehführung (Kugeldrehverbindung) ausgeführt, wobei obere und untere Lauf- bzw. Führungsbahnen für die Wälzelemente, zum Beispiel Rollen oder Kugeln segmentiert sind. Die Segmente sind durch Verbindungs- und Passelemente miteinander verbunden, wobei sie sich bevorzugt bei der Montage selbständig bündig zueinander ausrichten sollen. Ebenso bevorzugt sind obere und untere Segmente so ausgebildet, dass eine Dichtwirkung erzielbar ist und die Wälzelemente und Laufflächen der Segmente vor Umwelteinflüssen geschützt sind.

Die Segmente können selbsttragend ausgebildet sein oder mit einer Unterkonstruktion versehen sein.

Der Vorteil des erfindungsgemässen Lagers besteht darin, dass es bei grossen Radien bzw. Durchmessern grössere Fertigungstoleranzen als üblich bzw. nach DIN zulässt und somit einfacher herstellbar ist. Auch die Segmente sind einfacher bearbeitbar als ein grosser Lagerring. Es wird nur so genau gefertigt, wie es der Einsatzfall erfordert.

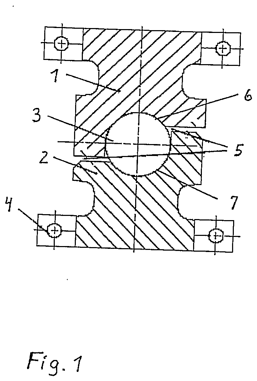

Die Erfindung wird nachfolgend in einem Ausführungsbeispiel an Hand einer Zeichnung näher beschrieben. In der Zeichnung zeigen die
- Fig. 1:: das Lager im Querschnitt

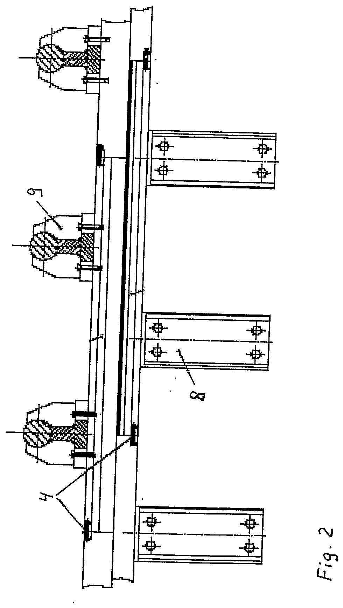

- Fig. 2:: eine Lageranordnung in einer Horde (Draufsicht).

An Trägern 9 einer nicht explizit dargestellten runden Horde einer Mälzereianlage mit einem Innenturm ist auf Konsolen 8 eine ringförmige Drehführung für einen Schneckenwender oder einen Belader/Entlader angeordnet. Die Drehführung (Innenführung) kann dabei einen Durchmesser von ca. 12-20 m aufweisen, wobei eine Segmentbauweise ab ca. 3 m Durchmesser möglich ist.

Die Drehführung besteht aus mehreren, hier 24 Segmenten, die durch Verbindungs- und Zentrierelemente 4 miteinander verbunden sind, wobei jedes Segment aus einem oberen Segment 1 und einem unteren Segment 2 besteht. Obere und untere Segmente 1, 2 weisen Laufbahnen mit Laufflächen 6 bzw. 7 auf, zwischen denen sich Wälzkugeln 3 bewegen. Die Laufflächen 7 sind lediglich gefräst, was für einen Langsamlauf ausreichend genau ist und die Fertigungskosten senkt.

Obere und untere Segmente 1, 2 sind zudem so ausgeführt, dass eine Dichtung 5 gebildet wird, die die Wälzkugeln 3 und die Laufflächen 6, 7 gegen Verschmutzungen sichert. Die Dichtung 5 kann zum Beispiel als Labyrinthdichtung ausgebildet sein.

### Bezugszeichen

- 1: oberes Segment
- 2: unteres Segment
- 3: Wälzkugel
- 4: Verbindungs- und Zentrierelement
- 5: Dichtung
- 6: Lauffläche
- 7: Lauffläche
- 8: Konsole
- 9: Träger

## Patentansprüche

1. Runde Darre, Horde oder Flachbodenweiche einer Mälzereianlage mit einem Lager mit Wälzelementen (3), die zwischen Laufflächen ringförmiger Führungen resp. Laufringe entsprechend ihrer Gestaltung frei beweglich angeordnet sind, wobei die Wälzelemente (3) zwischen oberen und unteren Laufflächen (6, 7) von oberen und unteren Segmenten (1, 2) einer Drehführung beweglich angeordnet sind.

2. Runde Darre, Horde oder Flachbodenweiche nach Anspruch 1, **dadurch gekennzeichnet, dass** die Drehführung aus einzelnen Kreisringsegmenten besteht, die mittels Verbindungs- und Zentrierelementen (4) miteinander verbunden sind.

3. Runde Darre, Horde oder Flachbodenweiche nach einem der Ansprüche 1 oder 2, **dadurch gekennzeichnet, dass** die Laufflächen (6, 7) lediglich gefräst sind.

4. Runde Darre, Horde oder Flachbodenweiche nach einem der vorstehenden Ansprüche, wobei die oberen und unteren Segmente (1, 2) so ausgebildet sind, dass eine Dichtung (5), insbesondere eine Labyrinthdichtung gebildet wird.

5. Runde Darre, Horde oder Flachbodenweiche nach einem der vorstehenden Ansprüche, wobei die Segmente selbsttragend ausgebildet sind.

## Claims

1. A round kiln, furnace or flat-bottom steep of a malting facility comprising a bearing with roll elements (3), which are freely movably arranged between running surfaces of annular guides or raceways based on their design, wherein the roll elements (3) are movably arranged between upper and lower running surfaces (6, 7) of upper and lower segments (1, 2) of a rotational guide.

2. The round kiln, furnace or flat-bottom steep according to claim 1, **characterised in that** the rotational guide consists of individual circular ring segments connected together via connecting and centering elements (4).

3. The round kiln, furnace or flat-bottom steep according to any one of claim 1 or 2, **characterised in that** the running surfaces (6, 7) are only milled.

4. The round kiln, furnace or flat-bottom steep according to any one of the preceding claims, wherein the upper and lower segments (1, 2) are configured such that a seal (5), in particular a labyrinth seal, is formed.

5. The round kiln, furnace or flat-bottom steep according to any one of the preceding claims, wherein the segments are formed to be self-supporting.

## Revendications

1. Touraille cylindrique, plateau de touraille ou cuve de trempage à fond plat d'une installation de maltage, comprenant un palier avec des éléments roulants (3) disposés de manière à être librement mobiles entre des surfaces de roulement de guidages annulaires ou de bagues de roulement en fonction de leur forme, les éléments roulants (3) étant disposés de manière à être mobiles entre des surfaces de roulement supérieures et inférieures (6, 7) de segments supérieurs et inférieurs (1, 2) d'un guidage rotatif.

2. Touraille cylindrique, plateau de touraille ou cuve de trempage à fond plat selon la revendication 1, caractérisé(e) en ce que le guidage rotatif est constitué de différents segments d'anneau circulaire raccordés les uns aux autres par des éléments de connexion et de centrage (4).

3. Touraille cylindrique, plateau de touraille ou cuve de trempage à fond plat selon la revendication 1 ou la revendication 2, caractérisé(e) en ce que les surfaces de roulement (6, 7) sont seulement fraisées.

4. Touraille cylindrique, plateau de touraille ou cuve de trempage à fond plat selon l'une des revendications précédentes, où les segments supérieurs et inférieurs (1, 2) sont prévus de manière à former une garniture d'étanchéité (5), en particulier une garniture à labyrinthe.

5. Touraille cylindrique, plateau de touraille ou cuve de trempage à fond plat selon l'une des revendications précédentes, où les segments sont prévus autoportants.
